# EUROPEAN PATENT APPLICATION

(11) **EP 4 300 788 A1**
(43) Date of publication of application: **03.01.2024**
(21) Application number: 22181701.8
(22) Date of filing: 28.06.2022
(51) Int. Cl.: H02K 5/22, B60S 1/08, H02K 11/21

(54) **ELECTRICAL COMPONENT FOR A WINDSCREEN WIPER MOTOR**

(71) Applicant: Valeo Systèmes d'Essuyage, 78322 Le Mesnil Saint Denis (FR)
(72) Inventor: ZAJAC, Piotr Michal, 32 050 Skawina (PL); KRUPA, Krzysztof, 32 050 Skawina (PL)
(74) Representative: Valeo Visibility

(57) **Abstract**

An electrical component (100, 400, 500, 700) for a windscreen wiper motor comprises a first conductive element (110, 410, 510, 710), preferably fabricated from a strip of conductive material, and a carrier element (150) comprising an insulating material (800) overmolded about said first conductive element (110, 410, 510, 710); said first conductive element (110, 410, 510, 710) is partially enveloped by said insulating material (800) such that an exposed portion of said first conductive element (110, 410, 510, 710) forms a connection region (160).

## Description

The present invention is directed towards an electrical component for a windscreen wiper motor, as well as a method for fabricating such an electrical component, and a windscreen wiper motor comprising such an electrical component.

### State of the Art

Automobiles and similar vehicles are provided with windscreen wipers, for removing water, dirt, and other such debris from the windscreen and other glazed surfaces. Generally, these are driven by electric motors. Within such motors, there are a number of electrical and electromechanical components, which are necessary for the proper control of the motor's operation.

In a conventional brushed DC motor, it is necessary to provide a conductive path between a source of electrical energy and the motor brushes which energize the rotor windings. For instance, in many cases the motor brushes are borne on a structure commonly referred to as a brush card, which is connected to the vehicle's wiper controls by way of an electrical connector.

Additionally, wiper motors of all kinds may have means for determining the position of the components of the wiper motor, in particular of the motor's output shaft. For instance, there is frequently provided on the output shaft a rotary switch comprised of a wheel carrying a circular metallic track, and at least two sliding contacts commonly referred to as "Park Fingers" which slide along this track as the wheel rotates. These park fingers are configured to make and/or break continuity at least once per rotation of the output shaft, at a specific angular position, or set of positions. In this way, the position of the output shaft can be determined at least once per rotation.

This is useful particularly because it permits the wiper system to cut power to the wiper motor and stop the wiper system at a specific position (the "park" position), usually at the beginning of a wiping cycle, ensuring that the wiper blades are stopped in a position outside the driver's field of view. Additional park fingers and tracks may be implemented to provide additional functionality, for instance a "service" position where the wiper arm is optimally positioned for replacement of the wiper blade.

Generally, these various components are connected to each other, and to circuitry external to the wiper motor, by way of a series of conductive strips or wires called a "Lead Frame." These strips are generally disposed on the interior surface of a cover member of the wiper motor housing, which is assembled to the body of the motor.

One aspect which is especially important in the design of a windscreen wiper motor is water-tightness. Windscreen wiper systems, and in particular windscreen wiper motors, are exposed to a great deal of water during normal operating conditions, and it is therefore very important to ensure that the wiper motor housing and the various electrical connections within the wiper motor are protected to the greatest degree possible from exposure to moisture.

It is thus an object of the present invention to provide a wiper motor which ameliorates at least some of these difficulties.

### Presentation of the Invention

According, therefore, to a first aspect, there is provided an electrical component for a windscreen wiper motor, comprising at least one conductive element, said at least one conductive element preferably being fabricated from a flat conductive material, and a carrier element comprising an insulating material overmolded about said conductive element.

According to the invention, the conductive element is partially enveloped by said insulating material, a connection region of said conductive element comprising an exposed portion of said conductive element.

Such a conductive element is advantageous in that the conductive element is enclosed in an overmolded plastic structure, except at a small and localized region where electrical contact can be made with other electrical components within the motor. In this way, the likelihood of water infiltration and damage to the conductive element is minimized.

Numerous possible variant embodiments of this aspect are possible, which may be freely combined according to the particular implementation of the invention, without going outside of the scope of the invention.

According to one possible embodiment, the at least one connection region is formed by superposing at least one portion of the conductive element over itself, the connection region comprising at least two superposed layers of the conductive element.

In this way, a complex connection region structure may be fabricated from a single piece of material, in particular a single strip or sheet of metal.

Preferably, the first conductive element comprises at least two fingers, each of said fingers being curved at a respective extremity thereof, such that said fingers nest within each other at least at the connection region.

In another possible embodiment, the electrical component further comprises a second conductive element connected to the first conductive element at the connection region thereof, the first conductive element being deformed at the connection region so as to retain the second conductive element therein.

Preferably, the second conductive element further comprises a sliding contact at an extremity opposite the connection region.

The resulting electrical component is thus provided with a park finger, which is securely attached to the leadframe in a simple and quickly-assembled manner.

In a possible embodiment, the connection between the first and second conductive elements is disposed outside the carrier element.

In this way, the overmolding of the carrier element does not obscure the mounting of the second conductive element to the first conductive element.

Preferably, the carrier element further comprises a seat for receiving the second conductive element, the connection region of the first conductive element extending from a face of said seat.

This is advantageous in that the seat of the carrier element reinforces the physical connection between the first and second conductive elements, thereby improving the reliability and durability of the electrical component in operation.

Preferably, the portion of the first conductive element extending from the face of the seat comprises at least one tab, said at least one tab retaining the second conductive element in the seat.

In this way, the first conductive element is quickly and easily fabricated, in particular by a single metal-stamping operation.

According to a second aspect, the invention is directed towards a windscreen wiper motor comprising an electrical component as described above.

According to a third aspect, the invention is directed towards a method for fabricating an electrical component for a windscreen wiper motor, comprising the steps of providing a first conductive element; deforming said first conductive element over at least a portion thereof, preferably by folding, stamping, or bending, thereby forming a connection region in said first conductive element; and overmolding an insulating material about said first conductive element, the connection region being partially enveloped by said insulating material.

Advantageously, the first conductive element is configured to at least partially block a flow of the insulating material during the overmolding step.

Such a configuration is particularly advantageous in that it obtains a durable, water- and dust-resistant electrical component, which presents a connection region with the desired characteristics.

In a possible embodiment, the method further comprises the steps of providing a second conductive element fabricated from a conductive material, preferably by folding, stamping, or bending; positioning the second conductive element upon the connection region of the conductive element; and deforming the connection region of the first conductive element to retain the second conductive element in position, preferably by folding, stamping, or bending.

Preferably, the second conductive element is disposed in a seat formed in the insulating material at the connection region of the first conductive element.

Preferably, the connection region of the first conductive element is folded over the second conductive element during the deforming step.

In a possible embodiment, the deforming step comprises a first sub-step wherein the first conductive element is stamped and/or bent and/or sheared; and subsequently a second sub-step wherein the first conductive element is folded.

### Brief Description of the Drawings

The invention will be better understood, and other details, characteristics, and advantages of the invention will become more apparent in the context of the attached figures, in which:
- Figures 1A, 1B, 1C, and 1D illustrate a series of steps for the fabrication of an electrical component for a windscreen wiper motor, according to a first embodiment of the invention;
- Figure 2 is a completed electrical component according to the embodiment of Figures 1A to 1D;
- Figures 3A and 3B are section views of the electrical component illustrated in Figure 2;
- Figure 4 is an illustration of a first variant embodiment of the electrical component of Figures 1A to 1D;
- Figure 5 is an illustration of a second variant embodiment of the electrical component of Figures 1A to 1D;
- Figure 6 is an orthogonal view of a first conductive element of the second variant embodiment illustrated in Figure 5;
- Figures 7A, 7B, and 7C illustrate a series of steps for the fabrication of an electrical component, according to a second embodiment of the invention;
- Figure 8 is a completed electrical component according to the embodiment of Figures 7A to 7C; and
- Figure 9 is a section view of the electrical component illustrated in Figure 8.

Of course, it will be readily understood that the above-mentioned Figures are given purely as a non-limiting example, and other variants and embodiments may be envisaged without departing from the scope of the invention as claimed.

### Detailed Description of the Invention

It will be noted that while the above-mentioned Figures are intended primarily for the illustration of the invention in an exemplary manner, and as such should not be considered as limiting the invention to the particular embodiments illustrated therein.

It will also be noted that, in the following description and in the Figures, identical elements present across several Figures are represented with identical reference numbers.

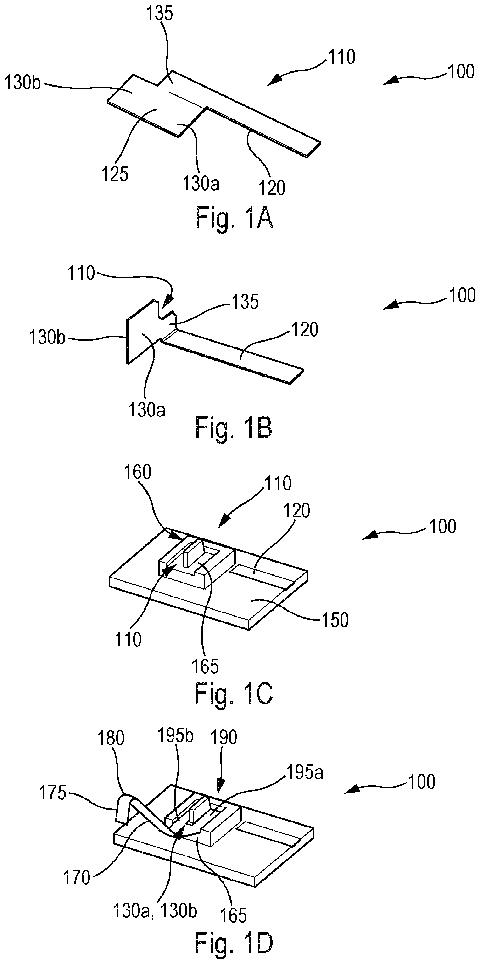

Figures 1A through 1D illustrate a series of steps for the fabrication of an electrical component 100 for a windscreen wiper motor, according to a first embodiment of the invention. Figure 1A illustrates a first step of the fabrication of the electrical component 100, wherein a first conductive element 110 is provided.

The first conductive element 110 comprises, globally, a shank 120 and a head 125. The head 125 comprises generally two flaps 130a, 130b, disposed generally opposite each other. The flaps 130a, 130b are attached to the shank 120 by way of the stem 135.

The first conductive element 110 is, as illustrated in Figures 1A to 1D, configured in such a manner that it may be fabricated from a single, flat piece of conductive material, most preferably a sheet of an appropriate metallic alloy such as brass, copper, or spring steel. Since the first conductive element is intended to fulfill both an electrical and a mechanical role in the finished electrical component 100, the particular metal or alloy selected should be chosen with these factors in mind.

In its initial, undeformed state as illustrated in Figure 1A, the first conductive element 110 may be referred to as a "blank." The first conductive element 100 will be further formed and incorporated into the finished electrical component 100 in subsequent steps, depicted in the following figures.

The first conductive element 110 may be formed by any of a number of sheet-metalworking processes, in particular shearing, blanking, stamping, punching, or the like. However, depending on the exact geometry of the first conductive element 110 in its "blank" state, more exotic metalworking methods may be preferable, for instance laser or water-jet cutting.

In Figure 1B, the first conductive element 110 of the electrical component 100 is deformed in a first deforming step. Specifically, the two flaps 130a, 130b of the head 125 are folded upwards so as to come into contact with each other. Also, the stem 135 is folded along with the flap 130b, such that it is at an angle with the shank 120.

Figure 1C illustrates the electrical component 100 after an overmolding step. The first conductive element 110 depicted in Figure 1B is overmolded with an insulating material to form a carrier element 150; the carrier element 150 forms at least a portion of a housing for a windscreen wiper motor. The insulating material is optimally some sort of durable, water-, heat-, and impact-resistant plastic, for instance acrylonitrile butadiene styrene (ABS), polyamide (PA), polycarbonate (PC), or polystyrene (PS); with or without some sort of filler matrix for reinforcement, for instance glass, carbon, or aramid fibers. The skilled person will be readily able to select the composition of the insulating material so as to be appropriate for the usage environment of the windscreen wiper motor in question.

As can be seen in Figure 1C below, a portion of the two flaps 130a, 130b of the head 125 protrude from a portion of the carrier element 150. This exposed portion constitutes a connection region 160, by which the first conductive element 110 may be connected to other components as discussed below in relation to the other Figures.

It will also be noted that, in this embodiment, the shank 120 of the first conductive element 110 is disposed in the carrier element 150 so as to be at least partially exposed. As the connection region 160 of the electrical component 100 will be disposed on the interior of the motor housing, the fact that the shank 120 is exposed to the interior atmosphere of the motor may be advantageous, in that it will minimize the thickness and overall volume of the carrier element 150 without compromising the water-tight quality of the motor housing of which the electrical component 100 is a part.

Preferably, the carrier element 150 is formed so as to form a pocket or seat about the connection region 160, as illustrated in Figure 1C in the form of the seat 165. The globally concave shape of this seat 165 facilitates the positioning of a second conductive element, which is discussed below in relation to Figure 1D.

Figure 1D illustrates the electrical component 100 of Figure 1C, further provided with a second conductive element 170. The second conductive element 170 is a park finger, comprising at a distal end a contact end 175, which engages a conductive trace on a park wheel as discussed above.

The second conductive element 170 is, in a manner similar to the first conductive element 110, formed from a single, flat piece of conductive material, which is formed into its final shape by various metalworking processes as discussed above with respect to the first conductive element 110.

The contact end 175 comprises a rounded tip 180, which permits it to slide along said conductive trace as the park wheel rotates while maintaining electrical continuity. Opposite the contact end 175 is a fixation end 190, here in the form of a fork having tines 195a, 195b. The tines 195a, 195b are configured to be disposed about the exposed portions of the flaps 130a, 130b of the first conductive element 110 which, as mentioned above, form the connection region 160 of the electrical component 100.

The tines 195a, 195b are further dimensioned so as to fit in the seat 165 formed in the carrier element 150, as described above. This offers additional reinforcement to the connection between the second conductive element 170 and the first conductive element, in this case by preventing the second conductive element 170 from rotating upon the connection region 160.

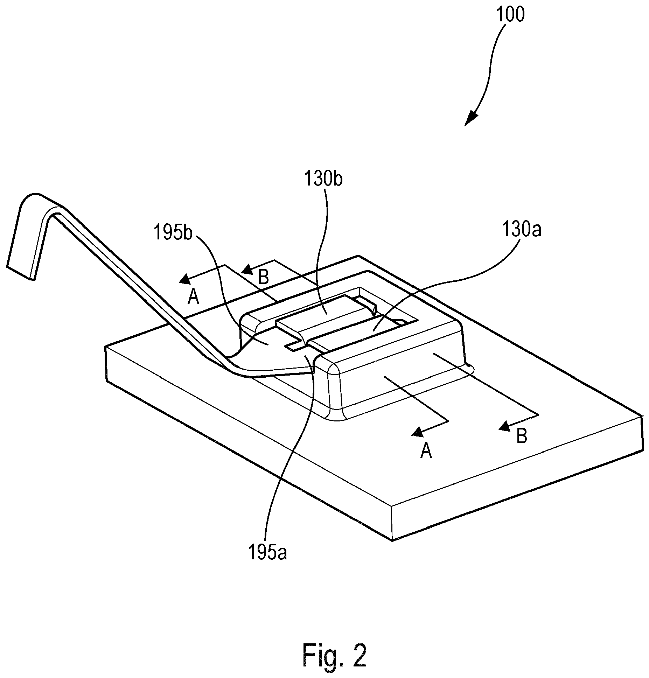

Figure 2 illustrates the electrical component 100 in its completed state (for clarity, the shank 120 is not illustrated). The flaps 130a, 130b of the first conductive element 110 are respectively bent over the tines 195a, 195b of the second conductive element 170, thereby locking the second conductive element 170 in place.

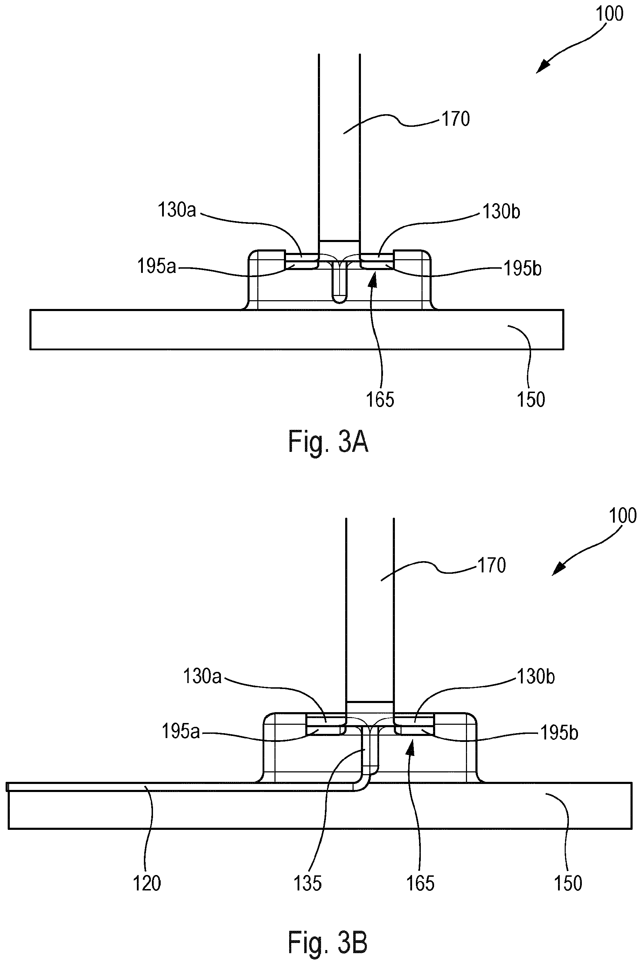

Figures 3A and 3B illustrate the electrical component 100 of Figure 2, through the section views indicated in Figure 2 as A-A and B-B, respectively. More specifically, the section views are each taken through planes passing through the indicated lines and perpendicular to the direction indicated in the section.

In Figure 3A, it can be seen that the tines 195a, 195b of the second conductive element 170 are disposed in the seat 165 of the carrier element 150. The flaps 130a, 130b of the first conductive element 110 are folded over the tines 195a, 195b so as to retain them in place.

The second conductive element 170 extends upwards from the tines 195a, 195b; the retention of the tines 195a, 195b in this manner ensures that the second conductive element 170 is retained in the electrical component 100 with sufficient rigidity to permit the shank 120 to act as a cantilevered spring element, ensuring good electrical contact with a park wheel of the electric motor in which the electrical component 100 is disposed.

Figure 3B illustrates the electrical component 100 of Figure 2 from a slightly different section; in this view, the shank 120 is visible, and can be seen extending from the stem 135 of the head 125 of the first conductive element 110. It will be understood that the shank 120 is representative of a leadframe or other such conductive means, such that the second conductive element 170 is electrically connected to *e.g.* a power source and/or control electronics of a vehicle.

Notably, in the embodiment depicted in Figures 3A and 3B, the overmolding that forms the carrier element 150 is dimensioned so that the shank 120 is exposed on an interior face of the electrical component 100.

Such is advantageous in that it minimizes the amount of material required for the fabrication of the electrical component, and moreover the exposed face of the shank 120 of the first conductive element 110 facilitates the dissipation of heat into the interior atmosphere of the electric motor.

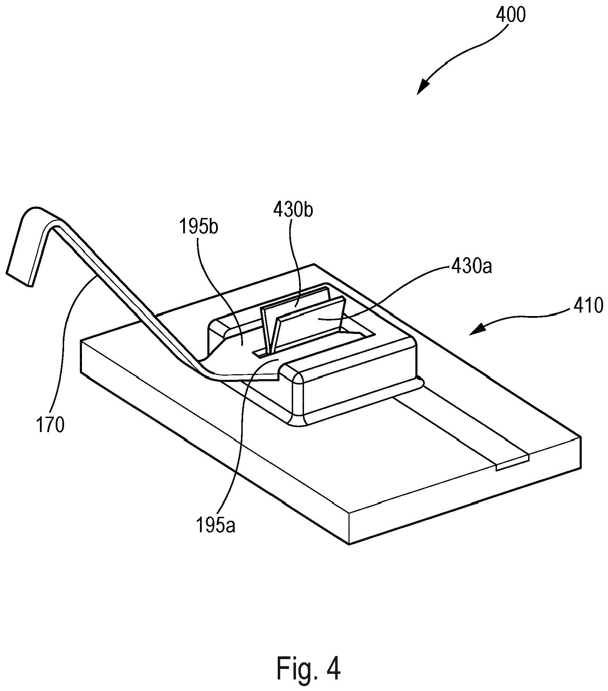

Figure 4 illustrates a possible variant of the electrical component of the preceding figures, presenting an electrical component 400 comprising a first conductive element 410. In this variant, the flaps 430a, 430b are not bent completely over the tines 195a, 195b of the second conductive element 170.

Such a configuration is particularly advantageous in that it is particularly easy to fabricate, as the incompletely-bent-over flaps 430a, 430b are separated by a non-zero angle. This separation makes it easier to insert a tool between the two flaps 430a, 430b and bend them into their final position, offering a degree of fluidity to the assembly and adjustment of the electrical component 400.

Such a configuration is also interesting, at least in certain implementations, in that it may lessen the total deformation that is necessary to fabricate the first conductive element 410; such may be advantageous in that it may minimize the overall degree of strain hardening in the flaps 430a, 430b and thus render the attachment of the second conductive element 170 more resilient.

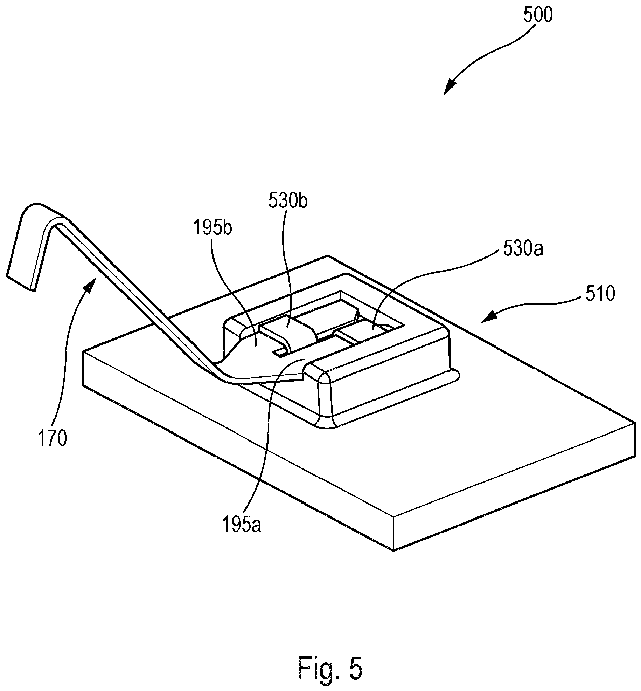

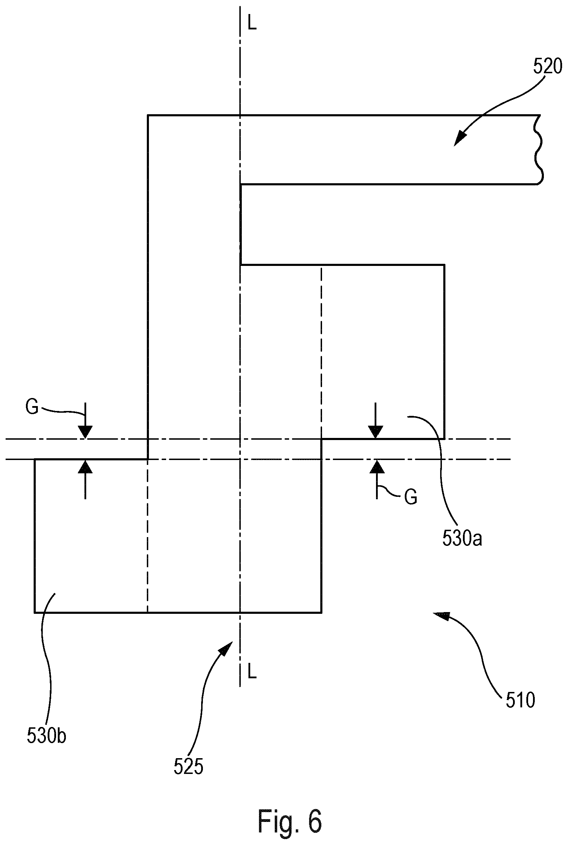

Figures 5 and 6 illustrate another possible variant of the electrical component of Figures 1 to 3, presenting an electrical component 500 comprising a first conductive element 510. In this embodiment, the flaps 530a, 530b retain the tines 195a, 195b of the second conductive element 170 as in the preceding embodiments.

However, the flaps 530a, 530b do not both extend over the entire length of the head of the first conductive element 510, as in the embodiments previously described. Rather, the flaps 530a, 530b extend over a length no more than half of that of the head of the first conductive element 510, offset from each other in the manner depicted in Figures 5 and 6.

Figure 6 illustrates in more detail the first conductive element 510 of the electrical component 500 illustrated in Figure 5, in particular in a state prior to the execution of the fabrication steps described above in relation to Figures 1A to 1D. In Figure 6, it can clearly be seen that the flaps 530a, 530b of the first conductive element 510 are offset along the longitudinal axis L of the head 525. It may be advantageous to provide a slight gap G between the two flaps 530a, 530 along the direction of the longitudinal axis L, so as to facilitate the folding over of the tines of the second conductive element as depicted in Figure 5.

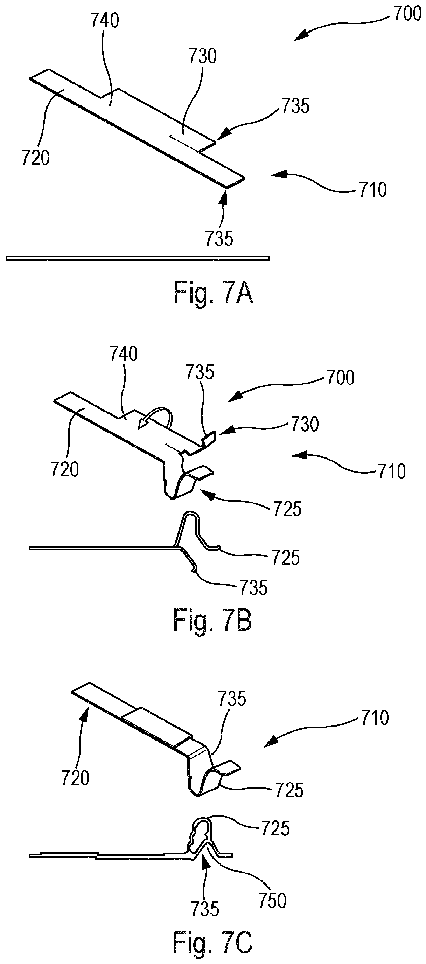

Turning now to Figures 7A to 9, there is illustrated an electrical component 700 according to a second embodiment of the invention. In particular, Figures 7A, 7B, and 7C illustrate successive steps for fabricating a first conductive element 710 for an electrical component 700, and will therefore be described in turn.

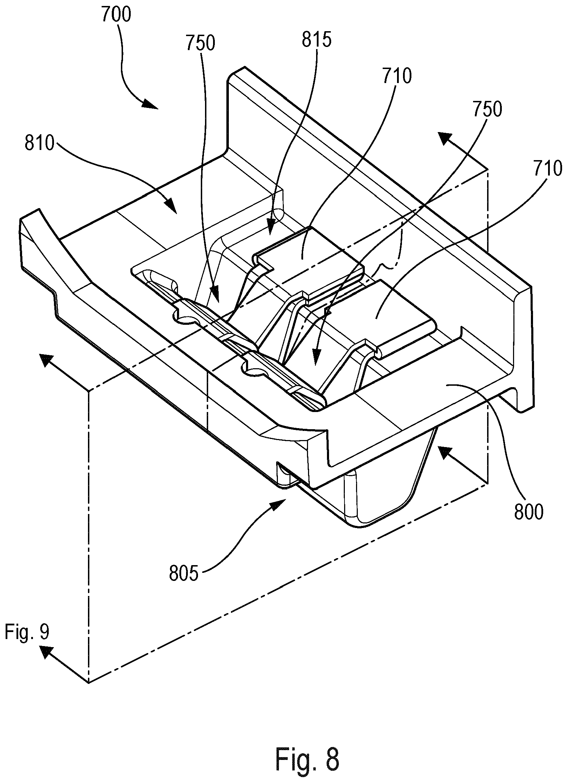

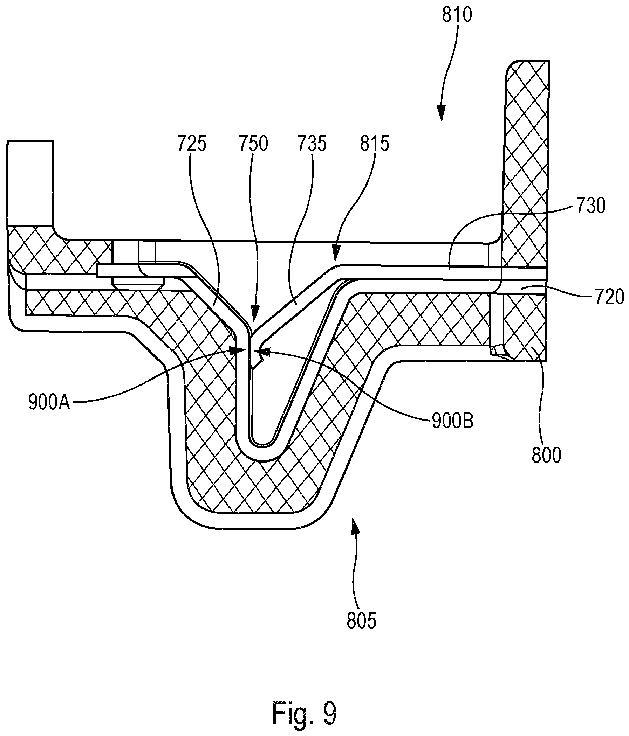

It will particularly be noted that in each of Figures 7A, 7B, and 7C are illustrated perspective and side views of a first conductive element 710, each pair of perspective and side views illustrating the same first conductive element 710. Additionally, Figures 8 and 9 depict the first conductive element 710 as integrated into an electrical component 700.

In Figure 7A, the electrical component 700 comprises the first conductive element 710. The first conductive element 710 comprises a first strip portion 720 and a second strip portion 730, which are connected by a bridge 740 to form a single, continuous piece. Notably, the strip portions 720 and 730 respectively comprise fingers 725, 735 which extend from the bridge 740.

In a preferable configuration, the strip portion 720 forms an extension of a leadframe element (not illustrated), which serves to connect the first conductive element to other electrical components in an electrical motor or elsewhere in the vehicle.

The first conductive element 710 is preferably fabricated from a strip or sheet of conductive material, which is advantageous in that it allows the first conductive element 710 to be fabricated quickly by simple, inexpensive metalworking processes. As in the embodiment of Figures 1A to 1D, the first conductive element 710 is preferably fabricated by a resilient, ductile, conductive metal such as copper, brass, or spring steel, though other metals or alloys may be envisaged for specific applications.

Figure 7B illustrates a subsequent folding step. The fingers 725, 735 are bent into a curved configuration, for instance in the manner illustrated, by known metalworking techniques. Consequently, the curved shapes of the fingers 725, 735, and the work hardening that is incurred in the metal of the first conductive element 710 during the bending process, obtain mechanical properties in the fingers 725, 735 of the strip portions 720, 730.

Subsequently, the two strip portions 720, 730 are folded over each other, for instance along the bridge 740 as illustrated by the arrow in Figure 7B. This serves to superpose the curved fingers 725, 735 of the strip portions 720, 730 of the first conductive element 710. This superposition is illustrated in Figure 7C.

In particular, it will be noted from Figure 7C that the fingers 725, 735 of the strip portions 720, 730, due to the folding of the first conductive element 710, are now positioned opposite each other. By the cooperation of the fingers 725, 735, a connection region 750 is formed. This connection region 750 is discussed in further detail in the following Figures.

Figure 8 illustrates a subsequent step for fabricating the electrical component 700. Two first conductive elements 710 are arranged and then a plastic material 800 is overmolded about them. In particular, the plastic material 800 is overmolded such that a first side 805 of the first conductive elements 710 is entirely covered, and thereby rendered impervious.

Optimally, the plastic material 800 that is overmolded about the first conductive elements 710 forms a part of the housing of an electric motor, with the first side 805 constituting the exterior of said housing. In any case, the plastic material 800 can be considered as constituting a carrier element, similar to the carrier element 150 discussed above with respect to the preceding embodiments.

At the same time, the overmolding of the first conductive elements 710 on a second side 810 of the electrical component 700 is configured such that the first conductive elements 710 block flow of the plastic material within the mold cavity during a molding operation, and consequently remain exposed, at the very least in the proximity of the connection region 750. Optimally, this second side 810 of the electrical component 700 is configured so as to open on or face the interior of the electrical motor.

In particular, in the embodiment illustrated in Figure 8, the plastic material 800 is overmolded so as to substantially follow the form of the first conductive elements 710, thereby forming a pocket 815. The pocket 815 is discussed in further detail below.

Additionally, and as mentioned above, in embodiments where a first conductive element 710 forms an extension of a leadframe, the overmolding of the plastic material 800 may advantageously be configured so as to enclose such leadframe elements, such that the only portions thereof which are exposed are electrical connection regions such as the connection region 750 as illustrated in Figure 8.

In this embodiment, two units of the first conductive element 710 are disposed in a side-by-side arrangement; however, fewer or more of the first conductive elements may be provided, and/or be disposed in other, different arrangements without departing from the scope of the invention.

Figure 9 is a section view of the electrical component 700, at the section plane illustrated in Figure 8. In particular, Figure 9 illustrates the interaction of the two fingers 725, 735, and their disposition within the pocket 815 of the electrical component 700.

More particularly, it will be noted that the two fingers 725, 735 of the electrical connection element 710 present contact points 900a, 900b, respectively, at which the two fingers 725, 735 are in contact with each other. The elasticity of the fingers 725, 735 (in particular that of the finger 735) means that another electrical component (for instance, a metal strip or tab contact element, a leadframe, finger contacts on a printed circuit board edge, or the like) may be inserted into the connection region 750; the other electrical component will push the finger 735 aside as it is inserted into the pocket 815, being retained between the fingers 725, 735 such that the contact points 900a, 900b establish electrical continuity therewith.

In this manner, electrical connections within a motor comprising an electrical component 700 can be quickly and reliably established, in a manner that offers both simplicity of fabrication and rigorous environmental protection from infiltration of water, dust, and other contaminants.

It will be understood that the invention is not necessarily limited to the specific embodiments and variants of the invention described in the above disclosure and with reference to the attached figures, and that nothing in the foregoing should be construed as limiting the scope of the invention in this manner.

Rather, it will be readily understood that different combinations of the aspects disclosed above are within the ability of the skilled person and should be considered as falling within the scope of the invention as well.

### List of Reference Signs

- 100, 400, 500, 700: Electrical Component
- 110, 410, 510, 710: First Conductive Element
- 120: Shank
- 125,135: Head
- 130a, 130b, 430a, 430b, 530a, 530b: Flaps
- 150: Carrier Element
- 160, 750: Connection Region
- 165: Seat
- 170: Second Conductive Element
- 175: Contact End
- 180: Tip
- 190: Fixation End
- 195a, 195b: Tines
- 720: First Strip Portion
- 730: Second Strip Portion
- 725, 735: Fingers
- 740: Bridge
- 800: Plastic Material
- 805: First Side
- 810: Second Side
- 815: Pocket
- 900a, 900b: Contact Points

## Claims

1. An electrical component (100, 400, 500, 700) for a windscreen wiper motor, the electrical component (100, 400, 500, 700) comprising:
- a first conductive element (110, 410, 510, 710), said first conductive element (110, 410, 510, 710) preferably fabricated from a strip of conductive material;
- a carrier element (150) comprising an insulating material overmolded about said first conductive element (110, 410, 510, 710);
**characterized in that** the first conductive element (110, 410, 510, 710) is partially enveloped by said insulating material, a connection region (160, 750) of the first conductive element (110, 410, 510, 710) comprising an exposed portion of said first conductive element (110, 410, 510, 710).

2. The electrical component (700) according to the preceding claim, wherein the connection region (750) is formed by superposing at least one portion of the first conductive element (710) upon itself, the connection region (750) comprising at least two superposed layers of the first conductive element (710).

3. The electrical component (700) according to claim 2, wherein the first conductive element (710) comprises at least two fingers (725, 735), each of said fingers (725, 735) being curved at a respective extremity thereof, such that said fingers (725, 735) nest within each other at least at the connection region (750).

4. The electrical component (100, 400, 500) according to claim 1, further comprising a second conductive element (170) connected to the first conductive element (110, 410, 510) at the connection region (160) thereof, the first conductive element (110, 410, 510) being deformed at the connection region (160) so as to retain the second conductive element (170) therein.

5. The electrical component (100, 400, 500) according to claim 4, wherein the second conductive element (170) further comprises a sliding contact (180) at an extremity (175) opposite the connection region (160).

6. The electrical component (100, 400, 500) according to either one of claims 4 or 5, wherein the connection between the first (110, 410, 510) and second (170) conductive elements is disposed outside the carrier element (150).

7. The electrical component (100, 400, 500) according to the preceding claim, wherein the carrier element (150) further comprises a seat (165) for receiving the second conductive element (170), the connection region (160) of the first conductive element (110, 410, 510) extending from a face of said seat (165).

8. The electrical component (100, 400, 500) according to the preceding claim, wherein the portion of the first conductive element (110, 410, 510) extending from the face of the seat (165) comprises at least one tab (130a, 130b, 430a, 430b, 530a, 530b), said at least one tab (130a, 130b, 430a, 430b, 530a, 530b) retaining the second conductive element (170) in the seat (165).

9. A windscreen wiper motor comprising an electrical component (100, 400, 500, 700) according to any one of the preceding claims.

10. A method for fabricating an electrical component (100, 400, 500, 700) for a windscreen wiper motor according to any one of the preceding claims, **characterized in that** it comprises the steps of
- providing a first conductive element (110, 410, 510, 710);
- deforming said first conductive element (110, 410, 510, 710) over at least a portion thereof, preferably by folding, stamping, or bending, thereby forming a connection region (160, 750) in said first conductive element (110, 410, 510, 710);
- overmolding an insulating material (800) about said first conductive element (110, 410, 510, 710), the connection region (160, 750) being partially enveloped by said insulating material (800).

11. The method according to the preceding claim, wherein the first conductive element (110, 410, 510, 710) is configured to at least partially block a flow of the insulating material (800) during the overmolding step.

12. The method according to either of claims 10 or 11, further comprising the steps of:
- providing a second conductive element (170) fabricated form a conductive material, preferably by folding, stamping, or bending;
- positioning the second conductive element (170) upon the connection region (160) of the first conductive element (110, 410, 510); and
- deforming the connection region (160) of the first conductive element (110, 410, 510) to retain the second conductive element (170) in position, preferably by folding, stamping, or bending.

13. The method according to the preceding claim, wherein the second conductive element (170) is disposed in a seat (165) formed in the insulating material at the connection region (160) of the first conductive element.

14. The method according to either one of claims 12 or 13, wherein the connection region (160) of the first conductive element (110, 410, 510) is folded over the second conductive element (170) during the deforming step.

15. The method according to any one of claims 10 to 13, wherein the deforming step comprises a first sub-step wherein the first conductive element (110, 410, 510, 710) is stamped and/or bent and/or sheared; and subsequently a second sub-step wherein the first conductive element (110, 410, 510, 710) is folded.
